# EUROPEAN PATENT APPLICATION

(11) **EP 4 512 649 A1**
(43) Date of publication of application: **26.02.2025**
(21) Application number: 24188931.0
(22) Date of filing: 16.07.2024
(51) Int. Cl.: B60K 35/10, B60K 35/22

(54) **VEHICLE INSTRUMENT PANEL STRUCTURE**

(30) Priority: 14.08.2023 JP 2023131983
(71) Applicant: Suzuki Motor Corporation, Shizuoka 432-8611 (JP)
(72) Inventor: MORI, Yohei, HAMAMATSU-SHI, 432-8611 (JP); ATA, Goki, HAMAMATSU-SHI, 432-8611 (JP); KUBOYAMA, Goki, HAMAMATSU-SHI, 432-8611 (JP); HASEGAWA, Jun, 432-8611 HAMAMATSU-SHI (JP)
(74) Representative: Plasseraud IP

(57) **Abstract**

[Problem to be Solved] A vehicle instrument panel structure is provided that allows transition from an operation of a shift lever to an operation of an EPB switch to be smoothly performed.

[Solution] A vehicle instrument panel structure includes: an instrument panel 2; an shift lever 21 which is disposed on the instrument panel 2 and in which an operation direction for changing a driving condition is configured in a vertical direction; and a brake switch 11 that generates a braking force for a vehicle, and at the shift lever 21, an operation position for stopping the vehicle is configured above an operation position for driving the vehicle forward, and the brake switch 11 is disposed above the shift lever 21.

## Description

### [Technical Field]

The present invention relates to a vehicle instrument panel structure in which an operation switch for operating an electric parking brake, and a shift lever, are arranged on an instrument panel.

### [Background Art]

Patent Literature 1 describes an operation switch for operating an electric parking brake. The operation switch (hereinafter called an EPB switch) described in Patent Literature 1 is disposed rearward of a shift lever provided at the center in the vehicle width direction of an electric vehicle. The shift lever described in Patent Literature 1 includes a drive range (D-range), a regeneration range (B-range; also called a brake range), a reverse range (R-range), a neutral range (N-range), and a parking range (P-range), as shift ranges. The shift ranges are linearly disposed from the front side of the electric vehicle in the order the P-range, the R-range, the B-range, the N-range, and the D-range.

Patent Literature 2 describes a vehicle instrument panel structure that includes a switch operation unit, and a shift lever on an instrument panel. The shift lever attached to the instrument panel described in Patent Literature 2 is disposed at the center of the instrument panel in the vehicle width direction, and the switch operation unit is disposed on a passenger's seat side, i.e., on the left side of the shift lever. The operation direction of the shift lever is the vertical direction along the surface of the instrument panel.

Typically, actions in a case of operating an EPB switch are a series of actions that move the shift lever forward or upward from the D-range into the P-range for parking, and subsequently operating the EPB switch.

### [Citation List]

### [Patent Literature]

[Patent Literature 1] JP 2016-107769 A
[Patent Literature 2] JP 2021-062661 A

### [Summary of Invention]

### [Problems to be Solved by the Invention]

Unfortunately, the EPB switch described in Patent Literature 1 is disposed rearward of the shift lever. Accordingly, after a driver moves the shift lever forward into the P-range, the driver has to move an operating arm rearward in order to operate the EPB switch. Thus, transition from the operation of the shift lever to the operation of the EPB switch cannot be smoothly performed. This similarly applies to the case of the shift lever attached to the instrument panel described in Patent Literature 2.

Accordingly, the present invention has as an object to provide a vehicle instrument panel structure that allows transition from an operation of a shift lever to an operation of an EPB switch to be smoothly performed.

### [Means for Solving the Problems]

An aspect of the present invention is a vehicle instrument panel structure that includes: an instrument panel; an operation unit which is disposed on the instrument panel and in which an operation direction for changing a driving condition is configured in a vertical direction; and a brake switch that generates a braking force for a vehicle, and at the operation unit, an operation position for stopping the vehicle is configured above an operation position for driving the vehicle forward, and the brake switch is disposed above the operation unit.

### [Advantageous Effects of Invention]

According to the present invention, a vehicle instrument panel can be provided that allows transition from an operation of a shift lever to an operation of an EPB switch to be smoothly performed.

### [Brief description of Drawings]

[Figure 1] Figure 1 is a perspective view of a vehicle instrument panel structure that includes a shift lever and a brake switch according to the present embodiment.
[Figure 2] Figure 2 is a front view of the vehicle instrument panel structure that includes the shift lever and the brake switch according to the present embodiment.
[Figure 3] Figure 3 is an enlarged plan view of the vehicle instrument panel structure that includes the shift lever and the brake switch according to the present embodiment.
[Figure 4] Figure 4 is an enlarged perspective view of the vehicle instrument panel structure that includes the shift lever and the brake switch according to the present embodiment.
[Figure 5] Figure 5(a) is a sectional view taken along line A-A in Figure 1; and Figure 5(b) is an enlarged view of (a).

### [Mode for Carrying Out the Invention]

Hereinafter, a vehicle instrument panel structure 50 according to the present invention is described based on the accompanying drawings. Note that in the diagrams, an arrow Fr direction indicates the forward direction in the vehicle front-rear direction. An arrow R indicates the right when an occupant looks vehicle-frontward. An arrow U indicates a vehicle upward direction.

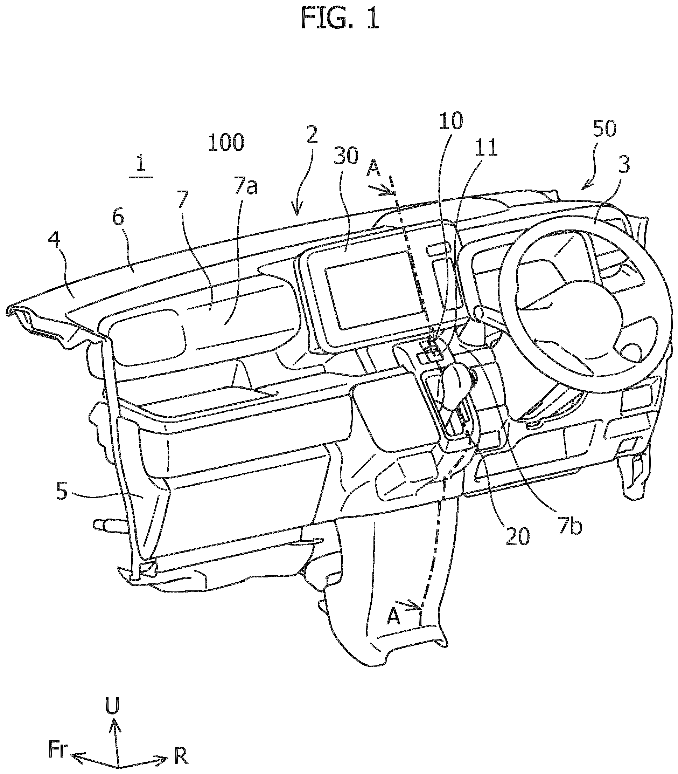

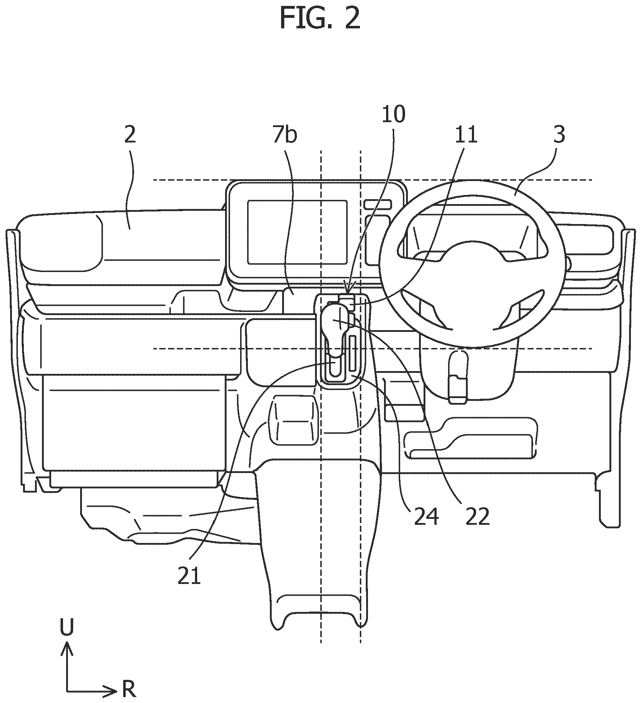

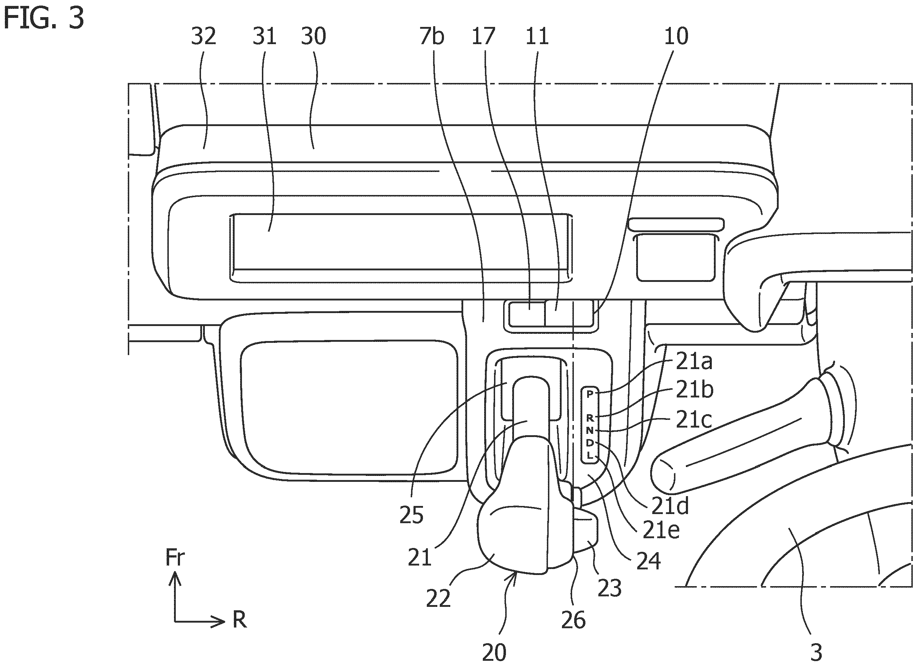

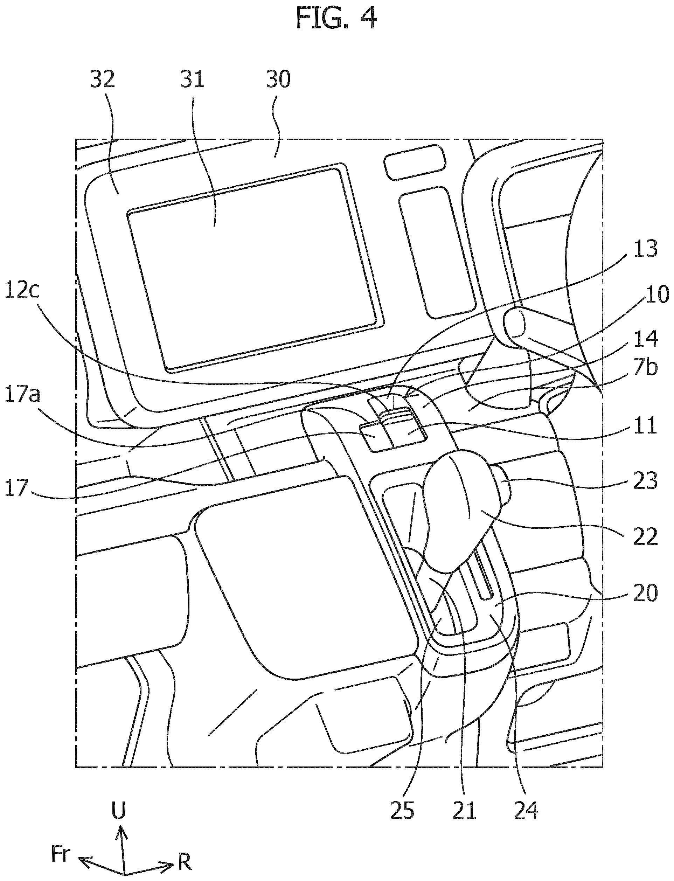

Figure 1 is a perspective view of the vehicle instrument panel structure 50 according to the present embodiment. Figure 2 is a front view of the vehicle instrument panel structure 50 according to the present embodiment. Note that the present embodiment indicates a so-called right-hand-drive embodiment in which the driver's seat is disposed on the right side of a cabin 100 when facing forward of the vehicle, and the passenger's seat is disposed on the left side of the cabin 100. In a so-called left-hand-drive case in which the driver's seat is disposed on the left side of a cabin 100 when facing forward of the vehicle, the embodiment is bilaterally symmetrical to the embodiment shown in Figure 1. Figure 3 is an enlarged plan view of the vehicle instrument panel structure 50 according to the present embodiment. Figure 4 is an enlarged perspective view of the vehicle instrument panel structure 50 according to the present embodiment.

Referring to Figures 1 to 4, the vehicle instrument panel structure 50 according to the present embodiment is described. As shown in Figure 1, the vehicle instrument panel structure 50 according to the present embodiment includes an instrument panel 2 that extends in the vehicle width direction below a front windshield 1, at a front part of the cabin 100. A steering wheel 3 is attached to a portion of the instrument panel 2 on the driver's seat side (a portion on the right side in Figure 1) via a column shaft covered with a column cover. In order from the top, a vehicle-mounted device 30, a switch unit 10, and a shift lever unit 20, which are described later, are attached to a portion at the center portion of the instrument panel 2. That is, the vehicle-mounted device 30, the switch unit 10, and the shift lever unit 20 are disposed on the instrument panel 2 closer to the passenger's seat than the steering wheel 3 in the vehicle width direction.

The instrument panel 2 includes an upper member 4 and a lower member 5 that are disposed vertically. The upper member 4 includes a top surface 6 and a rear surface 7. The top surface 6 faces upward, and extends in the vehicle width direction so as to connect the opposite sides of the cabin 100. On the front side of the top surface 6, the front windshield 1 is disposed. The rear surface 7 is disposed between the top surface 6 and the lower member 5, and extends in the vehicle width direction so as to connect the opposite sides of the cabin 100. The rear surface 7 includes: a vertical surface 7a that has an upper end connected to the rear end of the top surface 6, and faces rearward; and an upward inclination 7b that has an upper end connected to a lower end of the vertical surface 7a, and a lower end connected to an upper end of the lower member 5. As shown in Figure 4, the upward inclination 7b is formed to be inclined rearward as it goes downward from the upper end of the upward inclination 7b, i.e., be inclined upward. The position of the upward inclination 7b in the vertical direction is disposed substantially the same as the center position of the steering wheel 3.

Next, referring to Figures 2 to 4, the shift lever unit 20 is described. As shown in Figure 2, the shift lever unit 20 is disposed such that the center of the shift lever unit 20 in the vertical direction can overlap the lower end of the steering wheel, at the center of the instrument panel 2 in the vehicle width direction. The shift lever unit 20 is a unit for shifting gears of a transmission disposed between an engine of the vehicle and wheels, which are not shown, protrudes from the instrument panel 2 into the cabin, and includes a shift lever 21 having an operation direction in the vertical direction along the surface of the instrument panel 2, a grip 22 provided at the distal end of the shift lever 21, and a shift lever panel 24 fixed to the design surface of the instrument panel 2. A vertical-direction longitudinal slit 25 that permits the shift lever 21 to move in the vertical direction is formed in the shift lever panel 24. Note that the shift lever 21 is an operation unit in the present invention, and the shift lever panel 24 is a supporter in the present invention.

As shown in Figure 3, the shift lever unit 20 in the present embodiment includes, as shift ranges: a P-range 21a serving as an operation position for stopping the vehicle; an R-range 21b serving as an operation position for driving the vehicle rearward; an N-range 21c in a state of providing no drive force to the wheels; a D-range 21d serving as an operation position for driving the vehicle forward; and a low range (L-range) 21e that is for driving the vehicle forward and is for a low speed. Among the shift ranges, the P-range 21a is disposed uppermost on the shift lever panel 24, and then the R-range 21b, the N-range 21c, the D-range 21d, and the L-range 21e are disposed downward, in this order. That is, the P-range 21a is disposed higher than the D-range 21d. For example, the operation of the shift lever 21 is such that the shift range is set in the D-range 21d during traveling, and is set in the P-range 21a to make the vehicle stop in the state for parking. Accordingly, for parking, a driver performs an action of moving the shift lever 21 from the D-range 21d toward the P-range above the D-range 21d, i.e., an operation of moving the shift lever 21 upward.

A grip driver's-seat-side end face 26 that is an end face of the grip 22 on the driver's seat side in the vehicle width direction is provided with an unlock button 23 that protrudes from the grip driver's-seat-side end face 26. The unlock button 23 is a button used when the shift lever 21 is operated, by pressing this unlock button 23. In the case of operating the shift lever 21, even if an attempt is made to move the shift lever 21 upward for transition from the state of the D-range 21d to the P-range 21a, it cannot be moved because the shift lever 21 is locked unless the unlock button 23 pressed. Accordingly, to allow the driver to move the shift lever 21 from the state of the D-range 21d to that of the P-range 21a, the shift lever 21 is only allowed to be moved from the state of the D-range 21d to the P-range 21a by pressing the unlock button 23.

Next, referring to Figures 1 to 4, the switch unit 10 according to the present embodiment is described. As shown in Figure 2, the switch unit 10 is disposed at the upward inclination 7b of the instrument panel 2 in the vehicle-width-direction center, and the width of the switch unit 10 in the vertical direction is disposed within the width of the upper and lower ends of the steering wheel 3 in the vertical direction. As shown in Figures 3 and 4, the switch unit 10 includes a brake switch 11, and an operation switch 17. The brake switch 11 is disposed on the driver's seat side, and the operation switch 17 is disposed adjacent to the brake switch 11 on the passenger's seat side. The brake switch 11 is a switch for generating a braking force for the vehicle, and is, in the present embodiment, a switch for switching between a braking state and a brake unlocked state of a parking brake in a parking brake mechanism, not shown, and is a switch used in a case of parking. The operation switch 17 is a switch for holding a state in which a typical foot brake is in operation and, for example, holds the state in which the foot brake is in operation by turning on the operation switch 17 in a state of waiting for a traffic light, even when the driver takes the foot off the foot brake. Note that in the present embodiment, the brake switch 11 is a switch for switching between the braking state and the brake unlocked state of the parking brake in the parking brake mechanism. However, there is no necessary limitation to this. The brake switch 11 may be at least a switch that can hold the braking state of the parking brake in the parking brake mechanism.

The brake switch 11 is disposed so as to be above the shift lever unit 20 and within the width of the upper and lower ends of the steering wheel. That is, the brake switch 11 is disposed so as to be in the width of the steering wheel 3 in the vertical-direction width, i.e., a range indicated by two upper and lower broken lines extending in the vehicle width direction shown in Figure 2.

The brake switch 11 is disposed so as to be within the width range of the shift lever panel 24 in the vehicle width direction, i.e., a range indicated by two left and right broken lines extending in the vertical direction shown in Figure 2, in the vehicle width direction. That is, the brake switch 11 is included in the vehicle-width-direction width of the shift lever panel 24 in the vehicle width direction. More specifically, the vertical-direction extended line of the grip driver's-seat-side end face 26 provided with the unlock button 23 in a protruding manner substantially matches the vehicle-width-direction center of the brake switch 11 in the vehicle width direction. Note that in the present embodiment, the extended line of the grip driver's-seat-side end face 26 in the vertical direction substantially matches the vehicle-width-direction center of the brake switch 11 in the vehicle width direction. However, there is no necessary limitation to this. In the vehicle width direction, arrangement may be made so that the vehicle-width-direction width of the brake switch 11 can include the vertical-direction extended line of the grip driver's-seat-side end face 26.

Next, referring to Figures 1 to 4, the vehicle-mounted device 30 according to the present embodiment is described. The vehicle-mounted device 30 is disposed at a center portion of the rear surface 7 of the instrument panel 2. That is, the vehicle-mounted device 30 is disposed on the instrument panel 2 closer to the passenger's seat than the steering wheel 3 in the vehicle width direction. The switch unit 10 is disposed below the vehicle-mounted device 30. In the vehicle width direction, the switch unit 10 is disposed so as to be included in the vehicle-width-direction width range of the vehicle-mounted device 30. Consequently, in the vehicle width direction, the brake switch 11 of the switch unit 10 is disposed so as to be included in the vehicle-width-direction width of the vehicle-mounted device 30. The vehicle-mounted device 30 is a display device that includes a display unit 31 that is a display, and an outer frame 32 that holds the outer periphery of the display unit 31. The display unit 31 has a substantially rectangular shape, and the outer frame 32, which holds the display unit 31, also has a substantially rectangular shape. In the present embodiment, the vehicle-mounted device 30 is a navigation device that supports driving by the driver. In the present embodiment, the vehicle-mounted device 30 is a navigation device. However, without limitation to this, the vehicle-mounted device 30 may be an audio device, or an indicator device that indicates the speed or the number of revolutions.

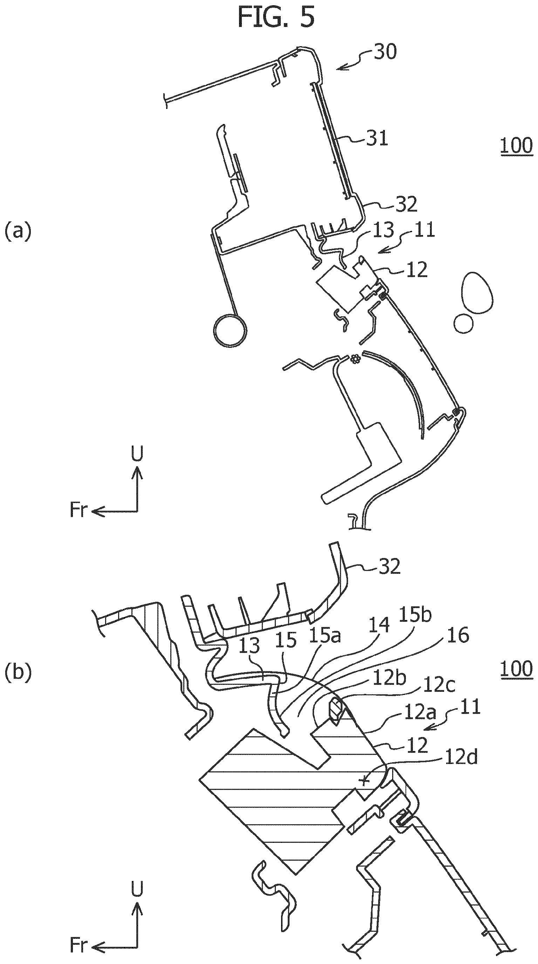

Next, referring to Figures 4, 5(a), and 5(b), the specific structure of the brake switch 11 is described. Figure 5(a) is a sectional view taken along line A-A in Figure 1. Figure 5(b) is an enlarged view of Figure 5(a). The brake switch 11 is disposed below the vehicle-mounted device 30. The brake switch 11 is a switch having a mechanical structure, and includes a switch main body 12, and a switch case 13 that stores the switch main body 12 in which an opening is formed and which stores the switch main body 12. Note that the switch case 13 also stores the operation switch 17. The switch case 13 is disposed so as to protrude from the surface of the upward inclination 7b (see Figure 4). An upper side of the switch case 13 includes a convex curve 14 formed to have a gradually curved shape that is convex toward the cabin 100 from the surface of the upward inclination 7b. The switch main body 12 includes a design wall 12a that faces the inside of the cabin 100, and an upper wall 12b that stands from the upper end of the design wall 12a toward the outside of the cabin 100. The upper end of the design wall 12a is provided with a protrusion 12c serving as an operation end. The design wall 12a is formed to have a gradually curved shape that is convex from the upper end toward the lower end so as to be along the convex curve 14 that is convex and has a gradually curved shape. On the lower end side of the switch main body 12, a turning shaft 12d that extends in the vehicle width direction is provided. The turning shaft 12d is supported by the switch case 13. The switch main body 12 is turnable around the turning shaft 12d. The protrusion 12c is swung around the turning shaft 12d between the inside of the cabin 100 and the outside of the cabin 100 (rear and front: right and left in Figure 5). The brake switch 11 includes a limit switch, not shown. The limit switch is turned on and off by the operation of the brake switch 11, thus switching the braking state or the brake unlocked state of the parking brake.

The switch case 13 includes a guide 15 that is formed concave from the surface of the switch case 13 above the upper wall 12b of the switch main body 12. The guide 15 includes: a vertical wall 15a that has an upper end connected to the surface of the switch case 13, and extends in the vertical direction from the surface of the switch case 13 toward the outside of the cabin (lower side in Figure 5); and a concave curve 15b that is connected to the lower end of the vertical wall 15a and is formed to have a concave and gradually curved shape. The vertical wall 15a is disposed to face the upper wall 12b. A clearance is provided between the lower end of the concave curve 15b and the lower end of the upper wall 12b. The guide 15 and the upper wall 12b form a depression 16 formed to be concave from the design surface of the switch case 13.

Since the switch unit 10 is disposed at the upward inclination 7b that is inclined rearward as it goes from upward to downward, the brake switch 11 switches the braking state or the brake unlocked state of the parking brake by pulling up the protrusion 12c serving as the operation end to the inside of the cabin 100. The driver switches the shift lever 21 from the D-range 21d to the P-range 21a, and subsequently pulls up the protrusion 12c to the inside of the cabin 100, thus operating the limit switch to switch the parking brake to the braking state. By the driver pulling up the protrusion 12c to the inside of the cabin 100 in the braking state of the parking brake, the parking brake is switched to the brake unlocked state.

The guide 15 formed concave above the upper wall 12b of the brake switch 11, and the upper wall 12b constitute the depression 16 formed concave from the design surface of the switch case 13. Accordingly, when the driver operates the brake switch 11, the driver can insert a finger into the depression 16, put the finger on the protrusion 12c, and pull it up to the inside of the cabin 100. Consequently, the operability of the brake switch 11 is improved.

As shown in Figure 5(b), the depression 16 formed concave from the surface of the switch case 13 in the brake switch 11 is disposed forward of the lower end of the cabin 100 side inner surface of the vehicle-mounted device 30 disposed above the brake switch 11. More specifically, the depression 16 is disposed forward of a corner part formed by the cabin 100 side inner surface and the lower surface of the outer frame 32 of the vehicle-mounted device 30. The brake switch 11 is disposed so as to overlap the vehicle-width-direction width of the vehicle-mounted device 30 in the vehicle width direction. Such a configuration achieves arrangement according to which if dust on the display unit 31 of the vehicle-mounted device 30, and goods on the vehicle-mounted device 30 fall, they do not enter the depression 16. Consequently, entrance of falling objects into the depression 16 can be reduced.

The operation switch 17 is a press-type button switch, is stored in the switch case 13, and is disposed adjacent to the brake switch 11 on the passenger's seat side. As shown in Figure 4, the upper end 17a of the operation switch 17 disposed adjacent to the brake switch 11 is disposed below the protrusion 12c disposed at the upper end of the brake switch 11. The brake switch 11 is a switch to be operated by pulling the protrusion 12c to the inside of the cabin. The operation switch 17 is a press-type button switch. The upper end 17a of the operation switch 17 is disposed below the protrusion 12c of the brake switch 11. Accordingly, erroneous operations in a mixing-up manner between the brake switch 11 and the operation switch 17 can be reduced.

In the present embodiment, the brake switch 11 is a switch having a mechanical structure. However, there is no necessary limitation to this. Instead of the brake switch 11 that is a switch having a mechanical structure, for example, a software switch, such as a touch panel switch, may be adopted. Even in the case in which the brake switch 11 is a software switch, the operation position for stopping the vehicle (P-range) is configured higher than the operation position for driving the vehicle forward (D-range) in the shift lever 21, and the brake switch 11 is disposed above the shift lever 21.

According to the present embodiment, the vehicle instrument panel structure 50 includes: the instrument panel 2; the shift lever 21 (operation unit) which is disposed on the instrument panel 2 and in which an operation direction for changing a driving condition is configured in a vertical direction; and the brake switch 11 that generates a braking force for a vehicle, and at the shift lever 21, an operation position for stopping the vehicle (P-range) is configured above an operation position for driving the vehicle forward (D-range), and the brake switch 11 is disposed above the shift lever 21.

According to this configuration, the driver can move the shift lever 21 from the D-range to the P-range disposed upward, and then operate the brake switch 11 disposed above the shift lever unit 20. Consequently, transition from the operation of the shift lever 21 to the operation of the brake switch 11 can be achieved by a smooth action.

In the present embodiment, the shift lever unit 20 includes the shift lever panel 24 (supporter) in which the longitudinal slit 25 that is formed in the vertical direction and permits the shift lever 21 to be moved in the vertical direction, and in the vehicle width direction, the brake switch 11 is disposed in the vehicle-width-direction width range of the shift lever panel 24.

According to this configuration, the transition from the operation of the shift lever 21 to the operation of the brake switch 11 can be further achieved by a smooth action.

In the present embodiment, the shift lever panel 24 (supporter) and the brake switch 11 are disposed closer to the passenger's seat than the steering wheel 3 disposed on the instrument panel 2 closer to the driver's seat, and in the vertical direction, the brake switch 11 is disposed in the vertical-direction width range of the steering wheel 3.

According to this configuration, in the vertical direction, the brake switch 11 is disposed in the vertical-direction width range of the steering wheel 3. Consequently, the transition from the operation of the shift lever 21 to the operation of the brake switch 11 can be further achieved by a smooth action.

In the present embodiment, on the vehicle-width-direction driver's-seat-side end face of the grip 22 provided at the distal end of the shift lever 21 (operation unit), the unlock button 23 that allows the shift lever 21 to be operated is provided. In the vehicle width direction, the brake switch 11 is disposed so as to include the vehicle-width-direction driver's-seat-side end face of the grip 22.

According to this configuration, since the unlock button 23 is typically operated by the driver with a thumb, the index finger is arranged on the passenger's seat side of the grip driver's-seat-side end face 26. Thus, the index finger can be smoothly guided to the brake switch 11.

In the present embodiment, the instrument panel 2 includes the upward inclination 7b inclined rearward as it goes from upward to downward, and the brake switch 11 is disposed on at the upward inclination 7b.

According to this configuration, the transition from the operation of the shift lever 21 to the operation of the brake switch 11 can be further achieved by a smooth action.

According to the embodiment described above, the vehicle instrument panel structure 50 includes: the instrument panel 2; the shift lever 21 (operation unit) which is disposed on the instrument panel 2 and in which an operation direction for changing a driving condition is configured in a vertical direction; and the brake switch 11 that generates a braking force for a vehicle, in which at the shift lever 21, an operation position for stopping the vehicle (P-range) is configured above an operation position for driving the vehicle forward (D-range), and the brake switch 11 is disposed above the shift lever 21. However, there is no necessary limitation to this. For example, an aspect may be adopted that is a vehicle instrument panel structure 50 that includes: the instrument panel 2; the shift lever 21 (operation unit) which is disposed on the instrument panel 2 and in which an operation direction for changing a driving condition is configured in a vertical direction; and the brake switch 11 that generates a braking force for a vehicle, in which at the shift lever 21, an operation position for stopping the vehicle is configured below an operation position for driving the vehicle forward, and the brake switch 11 is disposed below the shift lever 21.

Alternatively, an aspect may be adopted in which a vehicle instrument panel structure 50 that includes: an instrument panel 2; a shift lever 21 (operation unit) which is disposed on the instrument panel 2 and in which an operation direction for changing a driving condition is configured in a vertical direction; and a brake switch 11 that generates a braking force for a vehicle, wherein at the shift lever 21, an operation position for stopping the vehicle is configured below an operation position for driving the vehicle forward, the structure 50 further includes a shift lever panel (supporter) 24 in which a longitudinal slit 25 for permitting the shift lever 21 to move in the vertical direction is formed, in a vehicle width direction, the brake switch 11 is disposed in a vehicle-width-direction width range of the shift lever panel 24, and the brake switch 11 is disposed below the shift lever 21.

Alternatively, the vehicle instrument panel structure 50 may include: the instrument panel 2; the shift lever 21 (operation unit) which is disposed on the instrument panel 2 and in which an operation direction for changing a driving condition is configured in a vertical direction; and the brake switch 11 that generates a braking force for a vehicle, and at the shift lever 21, the operation position for stopping the vehicle (P-range) and the operation position for driving the vehicle forward (D-range) may be disposed in the vertical direction, and the brake switch 11 is disposed closer to the operation position for stopping the vehicle than the operation position for driving the vehicle forward in the vertical direction.

In the present embodiment, the vehicle instrument panel structure 50 that includes the instrument panel 2, and the shift lever 21 (operation unit) which is disposed on the instrument panel 2 and in which the operation direction for changing the driving condition is configured in the vertical direction is described. However, there is no necessary limitation to this. For example, in a shift lever which is provided at a center console between the driver's seat and the passenger's seat and in which the operation method is in the front-rear direction, the operation position for stopping the vehicle (P-range) and the operation position for driving the vehicle forward (D-range) may be disposed in the front-rear direction, and in the front-rear direction, the brake switch 11 may be disposed closer in the front-rear direction to the operation position for stopping the vehicle than the operation position for driving the vehicle forward.

The embodiment of the present invention and its modification example have thus been described above. However, the present invention is not limited to the embodiment and modification example described above. Further modifications and changes can be made based on the technical concept of the present invention.

### [Reference Signs List]

- 1: Front windshield
- 2: Instrument panel
- 3: Steering wheel
- 4: Upper member
- 5: Lower member
- 6: Top surface
- 7: Rear surface
- 7a: Vertical surface
- 7b: Upward inclination
- 10: Switch unit
- 11: Brake switch
- 12: Switch main body
- 12a: Design wall
- 12b: Upper wall
- 12c: Protrusion
- 12d: Turning shaft
- 13: Switch case
- 14: Convex curve
- 15: Guide
- 15a: Vertical wall
- 15b: Concave curve
- 16: Depression
- 17: Operation switch
- 17a: Upper end
- 20: Shift lever unit
- 21: Shift lever (operation unit)
- 21a: P-range
- 21b: R-range
- 21c: N-range
- 21d: D-range
- 21e: L-range
- 22: Grip
- 23: Unlock button
- 24: Shift lever panel (supporter)
- 25: Slit
- 26: Grip driver's-seat-side end face
- 30: Vehicle-mounted device
- 31: Display unit
- 32: Outer frame
- 50: Vehicle instrument panel structure
- 100: Cabin

## Claims

1. A vehicle instrument panel structure comprising:
an instrument panel;
an operation unit which is disposed on the instrument panel and in which an operation direction for changing a driving condition is configured in a vertical direction; and
a brake switch that generates a braking force for a vehicle, **characterized in that**
at the operation unit, an operation position for stopping the vehicle is configured above an operation position for driving the vehicle forward, and
the brake switch is disposed above the operation unit.

2. The vehicle instrument panel structure according to claim 1, wherein
the structure further comprises a supporter in which a longitudinal slit for permitting the operation unit to move in the vertical direction is formed, and
in a vehicle width direction, the brake switch is disposed in a vehicle-width-direction width range of the supporter.

3. The vehicle instrument panel structure according to claim 2, wherein
in the vehicle width direction, the supporter and the brake switch are disposed closer to a passenger's seat than a steering wheel disposed closer to a driver's seat on the instrument panel, and
in the vertical direction, the brake switch is disposed in a vertical-direction width range of the steering wheel.

4. The vehicle instrument panel structure according to claim 2, wherein
on a vehicle-width-direction driver's-seat-side end face of a grip provided at a distal end of the operation unit, an unlock button that allows the operation unit to be operated is provided, and
in the vehicle width direction, the brake switch is disposed so as to include the vehicle-width-direction driver's-seat-side end face of the grip.

5. The vehicle instrument panel structure according to claim 3, wherein
the instrument panel includes an upward inclination that has a design surface inclined rearward as going from upward to downward, and
the brake switch is disposed on the upward inclination.

6. The vehicle instrument panel structure according to claim 5, wherein
the brake switch includes:
a switch main body that includes a protrusion disposed at an upper end, and is turnable around a shaft that is positioned on a lower end side and extends in the vehicle width direction; and
a switch case that is installed on the upward inclination, and stores the switch main body,
the switch main body includes a design wall formed so as to be along a surface of the switch case, and an upper wall disposed to stand outward in a cabin from an upper end of the design wall,
the switch case includes a guide formed concave from the surface of the switch case above the switch main body, and the guide includes a concave curve that has a concave shape,
the guide and the upper wall constitute a depression, and
the brake switch holds a parking brake in a braking state by pulling up the protrusion to an inside of the cabin.

7. The vehicle instrument panel structure according to claim 6, wherein
a vehicle-mounted device is provided at an upper part of the instrument panel,
the brake switch is disposed below the vehicle-mounted device, and the brake switch is disposed so as to overlap the vehicle-mounted device in the vehicle width direction, and
the depression is disposed forward of a lower end of a cabin side inner surface of the vehicle-mounted device.

8. The vehicle instrument panel structure according to claim 6, wherein
an operation switch is disposed adjacent to the brake switch on a passenger's seat side, the operation switch is a press-type button switch, and
an upper end of the operation switch is disposed lower than an upper end of the brake switch.

9. A vehicle instrument panel structure comprising:
an instrument panel;
an operation unit which is disposed on the instrument panel and in which an operation direction for changing a driving condition is configured in a vertical direction; and
a brake switch that generates a braking force for a vehicle, **characterized in that**
at the operation unit, an operation position for stopping the vehicle is configured below an operation position for driving the vehicle forward,
the vehicle instrument panel structure further comprises a supporter in which a longitudinal slit for permitting the operation unit to move in the vertical direction is formed,
in a vehicle width direction, the brake switch is disposed in a vehicle-width-direction width range of the supporter, and
the brake switch is disposed below the operation unit.
